# EUROPÄISCHE PATENTSCHRIFT

(11) **EP 3 934 863 B1**
(45) Veröffentlichungstag und Bekanntmachung des Hinweises auf die Patenterteilung: **08.10.2025**
(21) Anmeldenummer: 20703743.3
(22) Anmeldetag: 05.02.2020
(51) Int. Cl.: B25J 19/00, H02G 11/02

(54) **ROBOTERARM MIT EINER LEITUNGSFÜHRUNGSVORRICHTUNG**
ROBOTIC ARM COMPRISING A CABLE ROUTING DEVICE
BRAS DE ROBOT COMPRENANT UN DISPOSITIF DE GUIDAGE DE LIGNE

(30) Priorität: 07.03.2019 DE 102019203127
(43) Veröffentlichungstag der Anmeldung: 12.01.2022
(73) Patentinhaber: KUKA Deutschland GmbH, 86165 Augsburg (DE)
(72) Erfinder: HANDFEST, Alexander, 86568 Hollenbach (DE)
(74) Vertreter: Böss, Dieter Alexander
(86) Internationale Anmeldenummer: PCT/EP2020/052837
(87) Internationale Veröffentlichungsnummer: WO 2020/177965

(56) Entgegenhaltungen:
- WO-A1-2018/195969
- DE-A1- 102017 213 033
- JP-A- H02 237 793

## Beschreibung

Die Erfindung betrifft einen Roboterarm gemäß dem Oberbegriff des Anspruchs 1.

Die JP H02 237793 A beschreibt einen solchen Roboterarm, bei dem Detektoren über die Kabeltrommel an einer Tragwelle befestigt sind, so dass sie sich mit einer der Tragwellen eines an beiden Enden gelagerten Kippteils mitdrehen. Zugeordnete Erfassungselemente werden bei entsprechender Drehung des Kippteils bewegt, so dass die Detektoren betätigt werden und dadurch die spezifische Drehposition des Kippteils erfasst wird.

Die WO 2018/195969 A1 beschreibt ein Kabelstrangführungsmodul für ein Robotergelenk und einen Roboter mit mindestens einem Robotergelenk, das ein solches Kabelstrangführungsmodul aufweist. Das Kabelstrangführungsmodul umfasst eine Grundplatte und ein drehbares Element, das mit der Grundplatte zusammenpasst und sich relativ zur Grundplatte drehen kann. Zumindest die Grundplatte und das drehbare Element bilden eine Einrichtung zur Aufnahme des Kabelbaums, der ein erstes Ende und ein zweites Ende aufweist. Das Kabelstrangführungsmodul umfasst ferner ein erstes Befestigungselement zur Befestigung des ersten Endes an der Grundplatte und ein zweites Befestigungselement zur Befestigung des zweiten Endes an dem drehbaren Element.

Die DE 10 2017 213033 A1 beschreibt eine Untersuchungs- und/oder Behandlungseinrichtung umfassend einen Mehrachsroboter mit einem im Raum bewegbaren Gelenkarm sowie in einem flexiblen Hüllrohr aufgenommene und zu einem oder mehreren am Gelenkarm oder einem an diesem angeordneten Träger angeordneten Untersuchungs- oder Behandlungsgeräten geführte Leitungen, wobei am Gelenkarm eine Schlittenanordnung umfassend einen wenigstens eine Umlenkrolle aufweisenden, linear gegen wenigstens ein eine Rückstellkraft aufbauendes Rückstellelement verschiebbaren Schlitten vorgesehen ist, wobei das Hüllrohr oder ein dieses umgebendes Führungsrohr um die Umlenkrolle geführt

WO 2016/188797 A1 beschreibt einen weiteren Roboterarm mit einer Energieleitungsführung.

Aufgabe der Erfindung ist es, eine besonders einfach herstellbare und zuverlässige Leitungsführungsvorrichtung an einem Roboterarm zu schaffen, durch welche ein Zwischenstrangabschnitt eines Energieleitungsstrangs besonders schonend über ein Gelenk des Roboterarms von einem ersten Strukturteil an ein zweites Strukturteil hinweggeführt werden kann.

Diese Aufgabe wird erfindungsgemäß gelöst durch einen Roboterarm gemäß Anspruch 1.

Der Roboter kann ein sogenannter Knickarmroboter sein, dessen Roboterarm ein Grundgestell als ein Glied aufweist, an dem ein Karussell als folgendes Glied um eine vertikale Achse drehbar gelagert und mittels eines ersten Antriebsmotors drehangetrieben ist. An dem Karussell kann eine Schwinge als weiteres Glied um eine zweite horizontale Achse auf und ab schwenkbar gelagert und mittels eines zweiten Antriebsmotors drehangetrieben sein. Die Schwinge trägt einen Armausleger, der um eine dritte horizontale Achse auf und ab schwenkbar gelagert und mittels eines dritten Antriebsmotors drehangetrieben ist. An dem Armausleger, dessen Grundarm ein weiteres Glied bildet, kann eine vierte Achse vorgesehen sein, welche in Längserstreckung des Armauslegers verläuft und über einen vierten Antriebsmotor eine Roboterhand, die einen Vorderarm des Armauslegers bildet und ein weiteres Glied darstellt, drehantrieben ist. Von der Roboterhand kann sich in einer ersten Variante der Roboterhand ein erster Schenkel und ein zweiter Schenkel gabelförmig nach vorne erstrecken. Die beiden Schenkel tragen in dieser ersten Variante eine Lagerung für ein freies Ende der Roboterhand, das insoweit zwischen den beiden Schenkeln angeordnet ist und das ein vorletztes Glied bildet. Die Lagerung definiert eine fünfte Achse des Roboterarms, um welche die Roboterhand mittels eines fünften Antriebsmotors schwenkbar bewegt werden kann. Alternativ zu einer Roboterhand mit zwei Schenkeln kann in einer zweiten Variante die Roboterhand lediglich einen einzigen Schenkel aufweisen, an dem dann die Lagerung für das freie Ende der Roboterhand ausschließlich an diesem einen Schenkel ausgebildet ist, so dass das freie Ende in Art einer Einarmschwinge lediglich einseitig an dem einzigen Schenkel gelagert ist. Ergänzend weist die Roboterhand eine sechste Achse auf, um einen Befestigungsflansch, der ein letztes Glied bildet, mittels eines sechsten Antriebsmotors drehbar antreiben zu können.

Jedes der Gelenke kann als ein Drehgelenk ausgebildet sein. Jedes Glied ist ausgebildet, Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes Glied des Roboterarms weist dazu mindestens ein Strukturteil auf, das ausgebildet ist, diese Kräfte und Momente aufnehmen und weiterleiten zu können. Im Allgemeinen ist ein solches Strukturteil hohl ausgebildet und kann beispielsweise von einem Metallgussteil oder einer geschweißten Stahlkonstruktion bestehen, welche beispielsweise Rohrabschnitte aufweisen kann. Jedes Glied ist über eines der Gelenke mit einem unmittelbar folgenden Glied des Roboterarms verbunden, insbesondere drehbar verbunden. Dazu kann das jeweilige Gelenk ein Drehlager aufweisen. Jedem Drehlager kann eine Dichtungsanordnung, wie beispielsweise ein Radialwellendichtring zugeordnet sein. An jedes Gelenk bzw. jedes Drehlager kann ein eigener Antriebsmotor, wie beispielsweise ein Elektromotor, insbesondere ein Servomotor, mit zughöriger Antriebssteuerung automatisch antreibbar angekoppelt sein. Die Antriebe werden im Allgemeinen von einer Robotersteuerung des Roboters angesteuert. Durch die Robotersteuerung können die Gelenke mittels der Antriebe gemäß eines Roboterprogramms automatisiert oder in einem Handfahrbetrieb des Roboters antriebsgesteuert verstell werden, um die Konfiguration des Roboterarms zu verändern. Unter einer Konfiguration wird die Menge der momentanen, einzelnen Achswinkelstellungen der Gelenke des Roboterarms verstanden.

Um die Antriebsmotoren durch die Robotersteuerung ansteuern zu können, ist die Robotersteuerung über einen Energieleitungsstrang mit allen Antriebsmotoren verbunden. Im Falle von elektrischen Antriebsmotoren kann der Energieleitungsstrang von einem Bündel von mehreren elektrischen Leitungen gebildet werden, wobei jeweils mindestens eine elektrische Leitung zu jeweils einem der Antriebsmotoren führt. Da im Allgemeinen ein solcher Energieleitungsstrang über ein Grundgestell des Roboterarms eingeführt und entlang des Roboterarms bis zum Antriebsmotor des letzten, d.h. des distalen Endgelenks geführt wird, läuft der Energieleitungsstrang mit entsprechenden Leitungsabzweigungen und einhergehenden Leitungsquerschnittsverringerungen entlang bzw. durch den gesamten Roboterarm. Je nach Bauart des Roboterarms kann der Energieleitungsstrang vollständig innerhalb der hohlen Glieder, d.h. der hohlen Strukturteile des Roboterarms verlegt sein oder außen entlang der Glieder, d.h. der Strukturteile des Roboterarms verlegt sein, die dann nicht zwingend hohl sein müssen.

Auch wenn die Glieder des Roboterarms als hohle Strukturteile ausgebildet sind, kann es beispielsweise aufgrund der Bauart der Gelenke, der Konstruktion von Getrieben und der Anordnung der Antriebsmotoren zweckmäßig oder sogar erforderlich sein, dass ein innerhalb eines der hohlen Glieder geführter Energieleitungsstrang im Bereich eines oder mehrerer der Gelenke des Roboterarms aus einem ersten Glied, d.h. aus einem ersten hohlen Strukturteil herausgeführt wird, außerhalb der Glieder bzw. außerhalb der hohlen Strukturteile um das betreffende Gelenk herumgeführt wird und anschließend in das unmittelbar folgende zweite Glied, d.h. in das zweite hohle Strukturteil wieder eingeleitet wird. Der Energieleitungsstrang kann Leitungen zum leiten von elektrischem Strom, insbesondere zur Versorgung von zumindest einem der Antriebsmotoren, elektrischen Signalen und/oder Prozeßfluiden, insbesondere Gasen, Flüssigkeiten wie Kühlwasser und Öl oder Gemische davon, aufweisen. Der Energieleitungsstrang kann auf einfach als Kabel bezeichnet werden.

Indem der Zwischenstrangabschnitt in einer Leitungsführungsvorrichtung geführt ist, die eine Energieleitungsstrangtrommel oder synonym dafür eine Kabeltrommel umfasst, wobei die Kabeltrommel bzw. Energieleitungsstrangtrommel eine sich zumindest über ihren Teilumfang erstreckende Führungsnut aufweist, in welcher der erste Strangabschnitt zum zumindest teilweisen Aufwickeln und Abwickeln bei einer Drehung der Kabeltrommel geführt ist und die Kabeltrommel eine zentrale Austrittsöffnung aufweist, aus welcher der zweiten Strangabschnitt axial herausgeführt ist, wobei die Kabeltrommel an dem zweiten Strukturteil befestigt ist und der Zwischenstrangabschnitt in wenigstens einem die Führungsnut mit der Austrittsöffnung verbindenden Verbindungskanal der Kabeltrommel geführt ist, wird eine besonders zuverlässige Leitungsführungsvorrichtung an einem Roboterarm geschaffen, durch welche der Zwischenstrangabschnitt des Energieleitungsstrangs besonders schonend über ein Gelenk des Roboterarms von einem ersten Strukturteil an ein zweites Strukturteil hinweggeführt wird.

Die erfindungsgemäße Leitungsführungsvorrichtung ist speziell für Drehgelenke zweckmäßig. Dabei kann die Kabeltrommel an einem der das betreffende Gelenke bildenden Strukturteile festgelegt sein. Insoweit dreht sich in diesem Fall die Kabeltrommel simultan mit dem Strukturteil mit, an dem die Kabeltrommel befestigt ist. Vorzugsweise liegt die zentrale Austrittsöffnung der Kabeltrommel auf der Drehhachse des betreffenden Gelenks. Da die Kabeltrommel fest mit dem sich drehenden oder zumindest schwenkenden Strukturteil fest verbunden ist, gibt es keine Relativbewegung zwischen diesem Strukturteil und der Kabeltrommel. Dies bedeutet, dass folglich der aus der zentralen Austrittsöffnung der Kabeltrommel austretende zweite Strangabschnitt des Energieleitungsstrangs keiner Torsionsbelastung um die Drehhachse des betreffenden Gelenks ausgesetzt ist. Dies trägt deutlich zur Schonung des Energieleitungsstrangs bei.

Auch innerhalb der Kabeltrommel ist der Energieleitungsstrangs im Verbindungskanal torsionsfrei und biegefrei geführt. Dazu kann der Zwischenstrangabschnitt im Verbindungskanal zumindest in seiner Längserstreckung unverschiebbar festgelegt sein. Beispielsweise kann der Zwischenstrangabschnitt im Verbindungskanal festgeklemmt sein. Der Verbindungskanal kann insoweit auch die Funktion einer an sich bekannten Zugentlastungstülle oder Zugentlastungsklemme aufweisen.

Die erfindungsgemäße Lösung umfasst somit eine Kabelrolle und gegebenenfalls einen Überlängenausgleich. An der Kabelrolle kann das Kabel d.h. der Energieleitungsstrang am Umfang in einer Führungsnut aufgerollt werden. Das Kabel wird innerhalb der Kabelrolle statisch zur Mitte d.h. zur Drehachse des Gelenks verlegt und dort axial herausgeführt. Die Kabelrolle kann vorzugsweise mit dem abtriebsseitigen Strukturteil des betreffenden Gelenks verbunden werden oder direkt mit einem Abtrieb des Gelenkgetriebes verbunden werden, so dass das Kabel d.h. der Energieleitungsstrang nach der mittigen Durchführung an der Kabelrolle statisch verlegt ist und keine weitere Bewegung ausführt.

Durch das Abrollen und/oder Aufrollen des Kabels, verlängert bzw. verkürzt sich der Anteil des ersten Strangabschnitts nach der Kabelrolle, insbesondere in einem Leitungsspeicher der Leitungsführungsvorrichtung. Diese notwendige Überlänge des Kabels kann in einem Überlängenausgleich d.h. in dem Leitungsspeicher bevorratet werden. Das Kabel kann dort beispielsweise in einer Schlaufe verlegt sein. Damit das Kabel nicht unkontrolliert an der umliegenden Struktur schleift und verschleißt, kann der Überlängenausgleich geführt werden.

Der Roboterarm kann insbesondere aufweisen: mehrere durch Glieder verbundene Gelenke, die von Antriebsmotoren des Roboterarms, welche an die Gelenke angekoppelt sind, antriebsgesteuert verstellbar sind, um die Armstellung zu verändern, wobei ein erstes Glied mit einem zweiten Glied durch eines der Gelenk verbunden ist, über das ein Energieleitungsstrang des Roboterarms, der ausgebildet ist, Antriebsenergie an den wenigstens einen Antriebsmotor zu übertragen, hinweggeführt ist, wobei das erste Glied ein erstes hohles Strukturteil aufweist, innerhalb dem ein erster Strangabschnitt des Energieleitungsstrangs geführt ist, das zweite Glied ein zweites hohles Strukturteil aufweist, innerhalb dem ein zweiter Strangabschnitt des Energieleitungsstrangs geführt ist, und der Energieleitungsstrang einen zwischen dem ersten Strangabschnitt und dem zweiten Strangabschnitt verlaufenden Zwischenstrangabschnitt aufweist, dadurch gekennzeichnet, dass der Zwischenstrangabschnitt in einer Leitungsführungsvorrichtung geführt ist, die eine Kabeltrommel umfasst, wobei die Kabeltrommel eine sich zumindest über ihren Teilumfang erstreckende Führungsnut aufweist, in welcher der erste Strangabschnitt zum zumindest teilweisen Aufwickeln und Abwickeln bei einer Drehung der Kabeltrommel geführt ist und die Kabeltrommel eine zentrale Austrittsöffnung aufweist, aus welcher der zweiten Strangabschnitt axial herausgeführt ist, wobei die Kabeltrommel an dem zweiten hohlen Strukturteil befestigt ist und der Zwischenstrangabschnitt in wenigstens einem die Führungsnut mit der Austrittsöffnung verbindenden Verbindungskanal der Kabeltrommel geführt ist.

Die Kabeltrommel kann eine erste Kabeltrommelhälfte und eine mit der ersten Kabeltrommelhälfte verbundene zweite Kabeltrommelhälfte aufweisen, wobei die erste Kabeltrommelhälfte eine über ihren Umfang umlaufende erste Seitenwange aufweist, die eine erste Seitenwand der Führungsnut bildet und die zweite Kabeltrommelhälfte eine über ihren Umfang umlaufende zweite Seitenwange aufweist, die eine zweite Seitenwand der Führungsnut bildet, und wobei ein umlaufender Absatz an der ersten Kabeltrommelhälfte und/oder an der zweiten Kabeltrommelhälfte einen Nutgrund der Führungsnut bildet.

Die beiden Kabeltrommelhälften können spiegelsymmetrisch gestaltet sein, so dass sich die beiden Kabeltrommelhälften zu der Kabeltrommel ergänzen, wenn diese mit ihren aufeinander zuweisenden Oberflächen aneinander anliegen. Die jeweilige Seitenwand der Führungsnut kann somit durch einen umlaufenden Absatz im Randbereich der jeweiligen Kabeltrommelhälfte gebildet werden. Der Nutgrund kann dabei jeweils hälftig von einer gegenüber dem Außenumfang der insoweit kreisscheibenförmigen Kabeltrommelhälfte radial nach innen zurückversetzen Umfangszylinderwand gebildet werden. Jeweils axial außenseitig ergänzt eine kreisringförmige Seitenwange, welche die jeweilige Seitenwand der Führungsnut bildet, die zurückversetze Umfangszylinderwand bzw. den Nutgrund. Im Falle einer geraden, sich radial erstreckenden Kanalhälfte eines Verbindungskanals je Kabeltrommelhälfte können die beiden Kabeltrommelhälften identisch ausgebildet sein. Andernfalls können die beiden Kabeltrommelhälfte spiegelsymmetrisch ausgebildet sein.

Die Kabeltrommel weist erfindungsgemäß eine erste Kabeltrommelhälfte und eine mit der ersten Kabeltrommelhälfte verbundene zweite Kabeltrommelhälfte auf, wobei die erste Kabeltrommelhälfte eine der zweiten Kabeltrommelhälfte zugewandte erste Trennfläche aufweist, in der eine erste Kanalhälfte des Verbindungskanals eingeformt ist und die zweite Kabeltrommelhälfte eine der ersten Kabeltrommelhälfte zugewandte zweite Trennfläche aufweist, in der eine die erste Kanalhälfte ergänzende zweite Kanalhälfte des Verbindungskanals eingeformt ist. Insbesondere kann die zweite Kabeltrommelhälfte mit der ersten Kabeltrommelhälfte lösbar verbunden sein.

Die erste Kanalhälfte des Verbindungskanals und die zweite Kanalhälfte des Verbindungskanals können insoweit von rinnenartigen Vertiefungen in der jeweiligen Trennfläche der Kabeltrommelhälfte gebildet werden. Die rinnenartigen Vertiefungen können einen halbkreisförmigen Querschnitt aufweisen. Innerhalb des Verbindungskanals, der bei zwei an den Trennflächen aneinandergesetzten Kabeltrommelhälften gebildet wird, kann der Energieleitungsstrang als Leitungsbündel oder in Form von Einzelleitungen geführt sein. Es kann ein einziger Verbindungskanal in der Kabeltrommel vorhanden sein. Alternativ können auch zwei oder mehrere Verbindungskanäle in der Kabeltrommel vorhanden sein. Sind zwei oder mehrere Verbindungskanäle in der Kabeltrommel vorhanden, dann können eine entsprechende Anzahl von Einzelleitungen oder mehrere Leitungsbündel in den verschiedenen Verbindungskanälen separat d.h. jeweils räumlich getrennt voneinander in der Kabeltrommel geführt sein.

Die erste Kabeltrommelhälfte kann erste Durchgangslöcher aufweisen und die zweite Kabeltrommelhälfte kann dabei zweite Durchgangslöcher aufweisen, die in einem zusammengefügten Zustand von erster Kabeltrommelhälfte und zweiter Kabeltrommelhälfte miteinander fluchten, wobei durch die ersten Durchgangslöcher und die zweiten Durchgangslöcher hindurchragende Schrauben vorgesehen sind, welche einerseits die erste Kabeltrommelhälfte und die zweite Kabeltrommelhälfte miteinander verbinden und wobei andererseits die zusammengefügte Kabeltrommel an dem zweiten Strukturteil befestigt ist.

Neben den ersten Durchgangslöchern und zweiten Durchgangslöchern können die Kabeltrommelhälften Sackbohrungen bzw. Sackvertiefungen und korrespondierende Stiftvorsprünge aufweisen, wobei die Stiftvorsprünge mit den Sackvertiefungen formschlüssig ineinandergreifen, wenn die beiden Kabeltrommelhälften zur Kabeltrommel zusammengesetzt sind.

Der wenigstens eine Verbindungskanal, insbesondere die erste Kanalhälfte des Verbindungskanals und die zweite Kanalhälfte des Verbindungskanals können einen in radialer Richtung gekrümmten Verlauf aufweisen.

Der wenigstens eine Verbindungskanal erstreck sich insoweit zwischen der Führungsnut und der zentralen Austrittsöffnung in radialer Richtung, allerdings im Falle des gekrümmten Verlaufs nicht entlang einer geraden Strecke, sondern beispielsweise entlang einer bogenförmigen, insbesondere kreisbogenförmigen Strecke. Die bogenförmige Strecke kann somit wahlweise eine konstante Krümmung aufweisen oder eine sich ändernde, insbesondere stetig zum Zentrum hin sich vergrößernde Krümmung aufweisen.

Die Kabeltrommel kann zwei oder mehr Verbindungskanäle für mehrere Einzelleitungen des Energieleitungsstrangs aufweisen, wobei wenigstens eine erste Einzelleitung in einem ersten Verbindungskanal eingelegt ist und wenigstens eine zweite Einzelleitung in wenigstens einem zweiten Verbindungskanal eingelegt ist. Mit den zwei oder mehr Verbindungskanäle, die vorzugsweise in zwei an den Trennflächen aneinandergesetzten Kabeltrommelhälften der Kabeltrommel gebildet werden, kann der Energieleitungsstrang in Form von zwei oder mehreren Leitungsbündeln oder in Form von zwei oder mehreren Einzelleitungen geführt werden. Es können somit zwei oder mehrere Verbindungskanäle in der Kabeltrommel vorhanden sein. Sind zwei oder mehrere Verbindungskanäle in der Kabeltrommel vorhanden, dann können eine entsprechende Anzahl von Einzelleitungen oder mehrere Leitungsbündel in den verschiedenen Verbindungskanälen separat d.h. jeweils räumlich getrennt voneinander in der Kabeltrommel geführt werden.

Der Zwischenstrangabschnitt kann lose, insbesondere innerhalb des Verbindungskanals klemmungsfrei, durch den Verbindungskanal hindurchgeführt sein.

Aufgrund des Verbindungskanals und insbesondere im Falle eines gekrümmten Verlaufs des Verbindungskanals kann der Zwischenstrangabschnitt zumindest weitgehend spannungsfrei eingelegt sein, ohne dass der Zwischenstrangabschnitt gequetscht werden würde. Indem der Zwischenstrangabschnitt zumindest weitgehend bündig in dem Verbindungskanal zu liegen kommt, ist der Zwischenstrangabschnitt ausreichend genau positioniert und ein Verrutschen in Längserstreckung des Zwischenstrangabschnitts ist nicht zu befürchten, auch dann, wenn der Zwischenstrangabschnitt nicht geklemmt ist, d.h. insoweit klemmungsfrei durch den Verbindungskanal hindurchgeführt ist.

Die Leitungsführungsvorrichtung kann in einer ersten grundlegenden Ausführungsform einen der Kabeltrommel zugeordneten Leitungsspeicher umfassen, in dem der erste Strangabschnitt zumindest abschnittsweise geführt ist, wobei der Leitungsspeicher ausgebildet ist, einen von der Führungsnut der Kabeltrommel bei ihrer Drehung ablaufende Länge des ersten Strangabschnitts in den Leitungsspeicher aufzunehmen und einen in die Führungsnut der Kabeltrommel bei ihrer entgegengesetzten Drehung auflaufende Länge des ersten Strangabschnitts aus dem Leitungsspeicher abzugeben.

In einer grundlegenden Ausführung kann der Leitungsspeicher schon allein durch einen Raum der Leitungsführungsvorrichtung gebildet werden, der schon allein ein Innenraum eines Strukturteils des Roboterarms sein kann, indem zumindest ein U-förmig verlaufender Abschnitt des ersten Strangabschnitts eingelegt ist. Der von der Kabeltrommel abweisende Teilabschnitt des ersten Strangabschnitts, das insoweit feststehend ist, kann in einer kreisförmigen statischen Führung festgelegt sein. Die kreisförmige statische Führung kann sich beispielsweise um ca. 270 Grad erstrecken. Die kreisförmige statische Führung kann in einem Halteteil ausgebildet sein, in dem der feststehende Teilabschnitt des ersten Strangabschnitts eingelegt ist. Das Halteteil kann mit dem ersten Strukturteil des Roboterarms fest verbunden sein.

Die Leitungsführungsvorrichtung kann in einer zweiten grundlegenden Ausführungsform eine Spannvorrichtung aufweisen, die ausgebildet ist, auf den ersten Strangabschnitt eine Zugkraft aufzubringen, welche den von der Kabeltrommel ablaufenden ersten Strangabschnitt trotz einer Drehung der Kabeltrommel unter einer Zugspannung in dem Leitungsspeicher hält, wobei die Spannvorrichtung eine den ersten Strangabschnitt im Leitungsspeicher umgreifende Energieführungskette mit mehreren Kettengliedern ist, von denen jeweils zwei benachbarte Kettengliedern über jeweils ein Federscharnier verbunden sind.

Der erste Strangabschnitt ist dabei von der Energieführungskette geführt. Beispielsweise kann der erste Strangabschnitt innerhalb der Energieführungskette geführt sein. Der erste Strangabschnitt kann beispielsweise U-förmig gebogen verlaufend angeordnet sein, wobei die Energieführungskette dieser U-Form folgt. Die Kettenglieder üben eine Kraft auf den ersten Strangabschnitt aus, der auf den ersten Strangabschnitt eine Zugspannung aufbringt. Jeweils zwei benachbarte Kettenglieder sind dabei gelenkig, insbesondere scharnierartig gegeneinander beweglich gelagert miteinander verbunden. Jeweils zwei benachbarte Kettenglieder sind über jeweils ein Federscharnier verbunden, so dass in Summe alle Federscharniere und Kettenglieder Kräfte erzeugen, die tendenziell versuchen, die Energieführungskette und damit den ersten Strangabschnitt zu strecken. Aufgrund dieses Dranges die Energieführungskette zu strecken, wird der erste Strangabschnitt insoweit von der Kabelrolle durch die Energieführungskette abgezogen bzw. federvorgespannt unter einer Zugspannung gehalten.

Die Leitungsführungsvorrichtung kann in einer dritten grundlegenden Ausführungsform eine Spannvorrichtung aufweisen, die ausgebildet ist, auf den ersten Strangabschnitt eine Zugkraft aufzubringen, welche den von der Kabeltrommel ablaufenden ersten Strangabschnitt trotz einer Drehung der Kabeltrommel unter einer Zugspannung in dem Leitungsspeicher hält, wobei die Spannvorrichtung eine Rolle aufweist, welche in dem Leitungsspeicher mittels einer Spannfeder gegen einen Schlaufenabschnitt des ersten Strangabschnitts gedrückt ist, um dem ersten Strangabschnitt eine Zugspannung aufzuprägen.

Der erste Strangabschnitt ist dabei auch U-förmig gebogen verlaufend angeordnet und die Rolle liegt mit ihrer Umfangsseite innenseitig an dem U-förmig gebogen verlaufenden ersten Strangabschnitt an. Die Spannfeder drückt die Rolle gegen den Kehlbereich des U-förmig gebogen verlaufenden ersten Strangabschnitts, so dass auf den ersten Strangabschnitt eine Zugkraft ausgeübt wird, die versucht, den ersten Strangabschnitt von der Kabelrolle abzuziehen.

Die Leitungsführungsvorrichtung kann in einer vierten grundlegenden Ausführungsform eine Stützvorrichtung aufweisen, die ausgebildet ist, ein seitliches Ausweichen des ersten Strangabschnitts quer zu seiner Längserstreckung zu verhindern, wenn aufgrund einer Drehung der Kabeltrommel der von der Kabeltrommel ablaufende erste Strangabschnitt unter Druckkraftwirkung von der Kabeltrommel ausgehend in den Leitungsspeicher geschoben wird, wobei die Stützvorrichtung eine drehbar an der Leitungsführungsvorrichtung gelagerte Stützrolle aufweist, die einen tangential von der Kabeltrommel ablaufenden Abschnitt des ersten Strangabschnitts außenseitig dieses Abschnitts anliegend mit ihrer Umfangsfläche abstützt.

Die Leitungsführungsvorrichtung kann in der vierten grundlegenden Ausführungsform eine Stützvorrichtung aufweisen, die ausgebildet ist, ein seitliches Ausweichen des ersten Strangabschnitts quer zu seiner Längserstreckung zu verhindern, wenn aufgrund einer Drehung der Kabeltrommel der von der Kabeltrommel ablaufende erste Strangabschnitt unter Druckkraftwirkung von der Kabeltrommel ausgehend in den Leitungsspeicher geschoben wird, wobei die Stützvorrichtung, alternativ oder ergänzend zu der drehbar an der Leitungsführungsvorrichtung gelagerten Stützrolle, mehrere entlang des Umfangs der Kabeltrommel verteilt angeordnete stationäre Umfangsrollen aufweist, die an der Leitungsführungsvorrichtung drehbar gelagert sind und die den auf der Kabeltrommel aufgewickelten Abschnitt des ersten Strangabschnitts gegen radiales Ausweichen von der Kabeltrommel sichern, indem sie stellenweise den aufgewickelten Abschnitt des ersten Strangabschnitts radial von außen abstützen.

Die Leitungsführungsvorrichtung kann in einer fünften grundlegenden Ausführungsform eine Stützvorrichtung aufweisen, die ausgebildet ist, ein seitliches Ausweichen des ersten Strangabschnitts quer zu seiner Längserstreckung zu verhindern, wenn aufgrund einer Drehung der Kabeltrommel der von der Kabeltrommel ablaufende erste Strangabschnitt unter Druckkraftwirkung von der Kabeltrommel ausgehend in den Leitungsspeicher geschoben wird, wobei die Stützvorrichtung ein oder mehrere entlang des Umfangs der Kabeltrommel sich erstreckende stationäre Umfangs-Führungsgleitbahnen aufweist, die an der Leitungsführungsvorrichtung befestigt sind und die den auf der Kabeltrommel aufgewickelten Abschnitt des ersten Strangabschnitts gegen radiales Ausweichen von der Kabeltrommel sichern, indem sie stellenweise oder streckenweise den aufgewickelten Abschnitt des ersten Strangabschnitts radial von außen abstützen.

Generell kann die Leitungsführungsvorrichtung, insbesondere der Leitungsspeicher an dem ersten Strukturteil befestigt sein.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung eines beispielhaften Roboterarms,
- Fig. 2: eine perspektivische Darstellung einer beispielhaften ersten Ausführungsform einer erfindungsgemäßen Leitungsführungsvorrichtung im Grundaufbau,
- Fig. 3: eine perspektivische Darstellung einer beispielhaften Kabeltrommelhälfte einer erfindungsgemäßen Kabeltrommel der Leitungsführungsvorrichtung,
- Fig. 4: eine perspektivische Darstellung einer beispielhaften zweiten Ausführungsform einer erfindungsgemäßen Leitungsführungsvorrichtung mit einer Federvorspannung mittels einer Energieführungskette,
- Fig. 5: eine perspektivische Darstellung einer beispielhaften dritten Ausführungsform einer erfindungsgemäßen Leitungsführungsvorrichtung mit einer Federvorspannung mittels Rolle und Spannfeder,
- Fig. 6: eine perspektivische Darstellung einer beispielhaften vierten Ausführungsform einer erfindungsgemäßen Leitungsführungsvorrichtung mit einer Stützvorrichtung in Form von kleinen stationären, drehbaren Umfangsrollen und einer großen Stützrolle, und
- Fig. 7: eine perspektivische Darstellung einer beispielhaften fünften Ausführungsform einer erfindungsgemäßen Leitungsführungsvorrichtung mit einer Stützvorrichtung in Form von Führungsgleitbahnen.

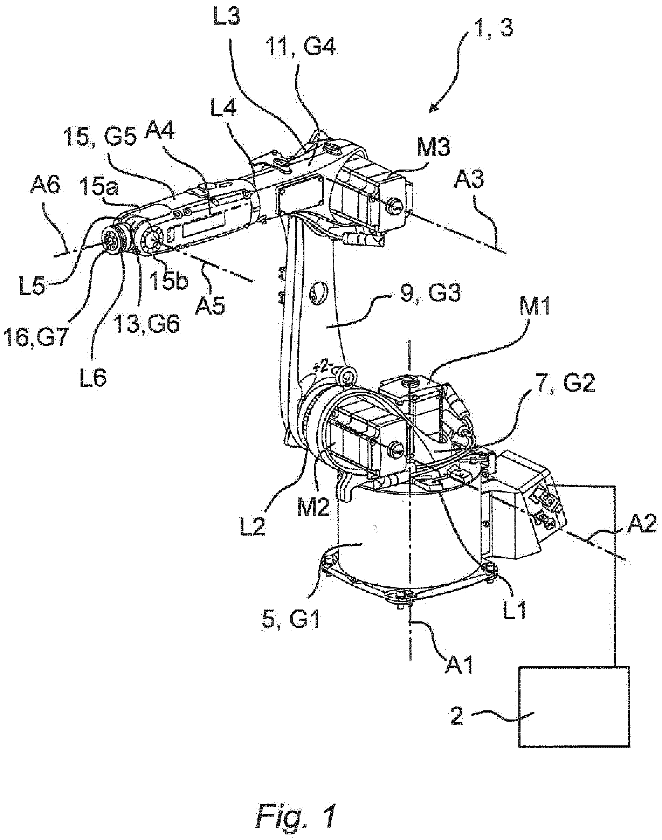

Die Fig. 1 zeigt einen beispielhaften Roboter 1 mit einer Robotersteuerung 2 und einem Roboterarm 3. Der Roboterarm 3 weist ein Grundgestell 5 als erstes Glied G1 auf, an dem ein Karussell 7 als zweites Glied G2 um eine erste vertikale Achse A1 drehbar gelagert und mittels eines ersten Antriebsmotors M1 drehangetrieben ist. Die Achsen A1-A6 des Roboterarms 3 können auch als Gelenke L1-L6 des Roboterarms 3 bezeichnet werden. An dem Karussell 7 ist eine Schwinge 9 als drittes Glied G3 um eine zweite horizontale Achse A2 auf und ab schwenkbar gelagert und mittels eines zweiten Antriebsmotors M2 drehangetrieben. Die Schwinge 9 trägt einen Armausleger 11, der um eine dritte horizontale Achse A3 auf und ab schwenkbar gelagert und mittels eines dritten Antriebsmotors M3 drehangetrieben ist. An dem Armausleger 11, dessen Grundarm ein viertes Glied G4 bildet, ist eine vierte Achse A4 vorgesehen, welche in Längserstreckung des Armauslegers 11 verläuft und über einen vierten Antriebsmotor (nicht dargestellt) einen Vorderarm 15 drehantreibt. Von dem Vorderarm 15 erstrecken sich ein erster Schenkel 15a und ein zweiter Schenkel 15b gabelförmig nach vorne. Die beiden Schenkel 15a, 15b tragen eine Lagerung für eine Hand 13, die ein sechstes Glied G6 bildet. Die Lagerung definiert eine fünfte Achse A5 des Roboterarms 3, um welche die Hand 13 mittels eines fünften Antriebsmotors (nicht dargestellt) schwenkbar bewegt werden kann. Ergänzend weist die Hand 13 eine sechste Achse A6 auf, um einen Befestigungsflansch 16, der ein siebtes Glied G7 bildet, mittels eines sechsten Antriebsmotors (nicht dargestellt) drehbar antreiben zu können. Jeder Achse A1 bis A6 ist ein Gelenk L1 bis L6 zugeordnet, welche Gelenke L1 bis L6 im Falle des gezeigten Ausführungsbeispiels in Art einer seriellen Kinematik eines Kickarmroboters die Glieder G1 bis G7 verbinden. Eine erfindungsgemäße Leitungsführungsvorrichtung 20 kann insbesondere am Gelenk L5 vorgesehen sein, welches die Hand 13, d.h. das Glied G6 mit dem Vorderarm 15, d.h. dem Glied G5 schwenkbar verbindet.

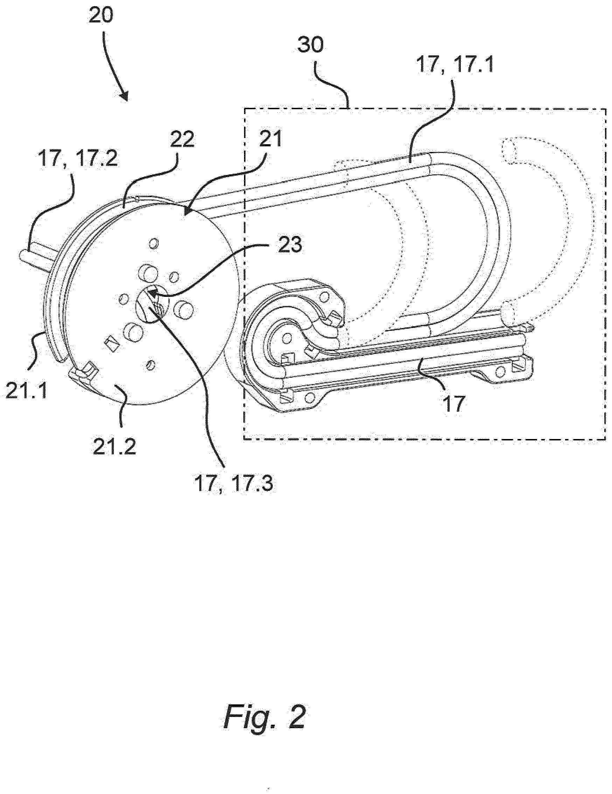

Im Folgenden wird bezugnehmend auf Fig. 2 bis Fig. 7 die Leitungsführungsvorrichtung 20 für einen Energieleitungsstrang 17 beschrieben. Der Energieleitungsstrang 17 des Roboterarms 3 ist ausgebildet, Antriebsenergie an den wenigstens einen Antriebsmotor M1-M6 zu übertragen. Ein erstes Glied der Glieder G1-G7 weist ein erstes hohles Strukturteil auf, innerhalb dem ein erster Strangabschnitt 17.1 des Energieleitungsstrangs 17 geführt ist, ein benachbartes zweites Glied der Glieder G1-G7 weist ein zweites hohles Strukturteil auf, innerhalb dem ein zweiter Strangabschnitt 17.2 des Energieleitungsstrangs 17 geführt ist. Der Energieleitungsstrang 17 weist außerdem einen zwischen dem ersten Strangabschnitt 17.1 und dem zweiten Strangabschnitt 17.2 verlaufenden Zwischenstrangabschnitt 17.3 auf.

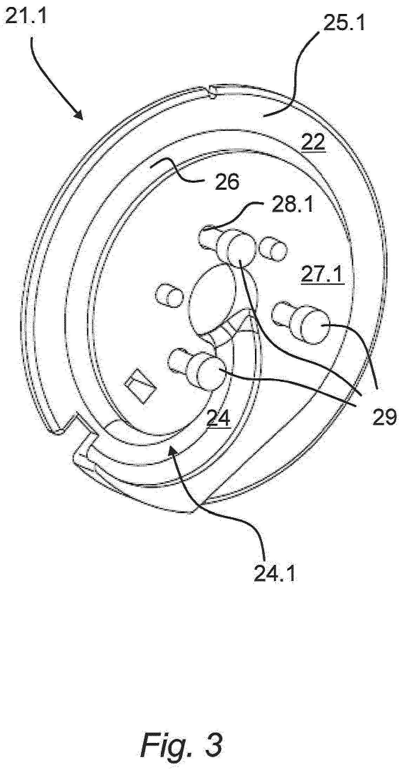

Der Zwischenstrangabschnitt 17.3 ist in der Leitungsführungsvorrichtung 20 geführt, die eine Kabeltrommel 21 umfasst, wobei die Kabeltrommel 21 eine sich zumindest über ihren Teilumfang erstreckende Führungsnut 22 aufweist, in welcher der erste Strangabschnitt 17.1 zum zumindest teilweisen Aufwickeln und Abwickeln bei einer Drehung der Kabeltrommel 21 geführt ist und die Kabeltrommel 21 eine zentrale Austrittsöffnung 23 aufweist, aus welcher der zweiten Strangabschnitt 17.2 axial herausgeführt ist, wobei die Kabeltrommel 21 an dem zweiten hohlen Strukturteil befestigt ist und der Zwischenstrangabschnitt 17.3 in wenigstens einem die Führungsnut 22 mit der Austrittsöffnung 23 verbindenden Verbindungskanal 24 (Fig. 3) der Kabeltrommel 21 geführt ist.

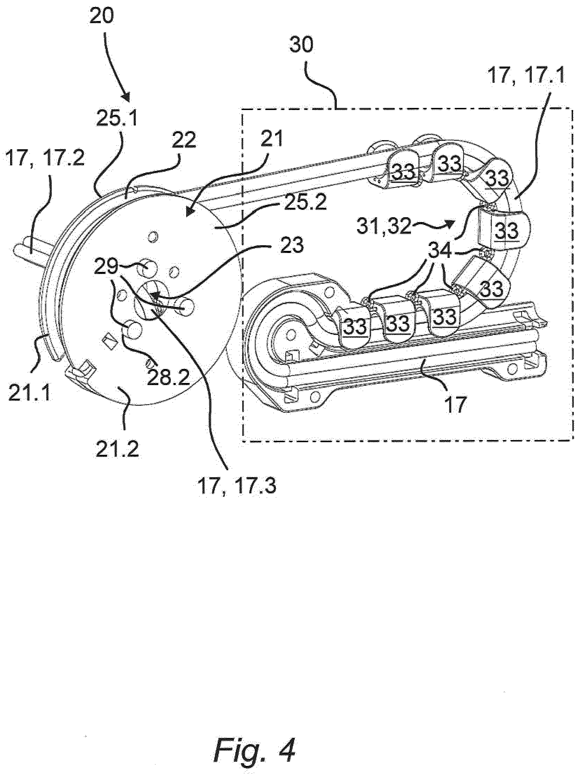

Die Kabeltrommel 21 weist eine erste Kabeltrommelhälfte 21.1 und eine mit der ersten Kabeltrommelhälfte 21.1 verbundene zweite Kabeltrommelhälfte 21.2 auf, wobei die erste Kabeltrommelhälfte 21.1 eine über ihren Umfang umlaufende erste Seitenwange 25.1 aufweist, die eine erste Seitenwand der Führungsnut 22 bildet und die zweite Kabeltrommelhälfte 21.2 eine über ihren Umfang umlaufende zweite Seitenwange 25.2 (Fig. 4) aufweist, die eine zweite Seitenwand der Führungsnut 22 bildet. Ein umlaufender Absatz 26 an der ersten Kabeltrommelhälfte 21.1 (und an der zweiten Kabeltrommelhälfte 21.2) bildet einen Nutgrund der Führungsnut 22.

Die erste Kabeltrommelhälfte 21.1 weist eine der zweiten Kabeltrommelhälfte 21.2 zugewandte erste Trennfläche 27.1 auf, in der eine erste Kanalhälfte 24.1 des Verbindungskanals 24 eingeformt ist und die zweite Kabeltrommelhälfte 21.2 eine der ersten Kabeltrommelhälfte 21.1 zugewandte zweite Trennfläche aufweist, in der eine die erste Kanalhälfte 24.1 ergänzende zweite Kanalhälfte des Verbindungskanals 24 eingeformt ist.

Die erste Kabeltrommelhälfte 21.1 weist erste Durchgangslöcher 28.1 auf und die zweite Kabeltrommelhälfte 21.2 zweite Durchgangslöcher 28.2 auf, die in einem zusammengefügten Zustand von erster Kabeltrommelhälfte 21.1 und zweiter Kabeltrommelhälfte 21.2 (siehe Fig. 4 bis Fig. 7) miteinander fluchten, wobei durch die ersten Durchgangslöcher 28.1 und die zweiten Durchgangslöcher 28.2 hindurchragende Schrauben 29 vorgesehen sind, welche einerseits die erste Kabeltrommelhälfte 21.1 und die zweite Kabeltrommelhälfte 21.2 miteinander verbinden, und andererseits die zusammengefügte Kabeltrommel 21 an dem zweiten Strukturteil befestigt werden kann.

Wie in Fig. 3 dargestellt ist, kann der Verbindungskanal 24, insbesondere die erste Kanalhälfte 24.1 des Verbindungskanals 24 und die zweite Kanalhälfte 24.2 des Verbindungskanals 24 einen in radialer Richtung gekrümmten Verlauf aufweisen.

In der ersten Ausführungsform gemäß Fig. 2 weist die Leitungsführungsvorrichtung 20 einen der Kabeltrommel 21 zugeordneten Leitungsspeicher 30 auf, in dem der erste Strangabschnitt 17.1 zumindest abschnittsweise geführt ist, wobei der Leitungsspeicher 30 ausgebildet ist, einen von der Führungsnut 22 der Kabeltrommel 21 bei ihrer Drehung ablaufende Länge des ersten Strangabschnitts 17.1 in den Leitungsspeicher 30 aufzunehmen und einen in die Führungsnut 22 der Kabeltrommel 21 bei ihrer entgegengesetzten Drehung auflaufende Länge des ersten Strangabschnitts 17.1 aus dem Leitungsspeicher 30 abzugeben.

In der zweiten Ausführungsform gemäß Fig. 4 weist die Leitungsführungsvorrichtung 20 eine Spannvorrichtung 31 auf, die ausgebildet ist, auf den ersten Strangabschnitt 17.1 eine Zugkraft aufzubringen, welche den von der Kabeltrommel 21 ablaufenden ersten Strangabschnitt 17.1 trotz einer Drehung der Kabeltrommel 21 unter einer Zugspannung in dem Leitungsspeicher 30 hält, wobei die Spannvorrichtung 31 eine den ersten Strangabschnitt 17.1 im Leitungsspeicher 30 umgreifende Energieführungskette 32 mit mehreren Kettengliedern 33 ist, von denen jeweils zwei benachbarte Kettenglieder 33 über jeweils ein Federscharnier 34 verbunden sind.

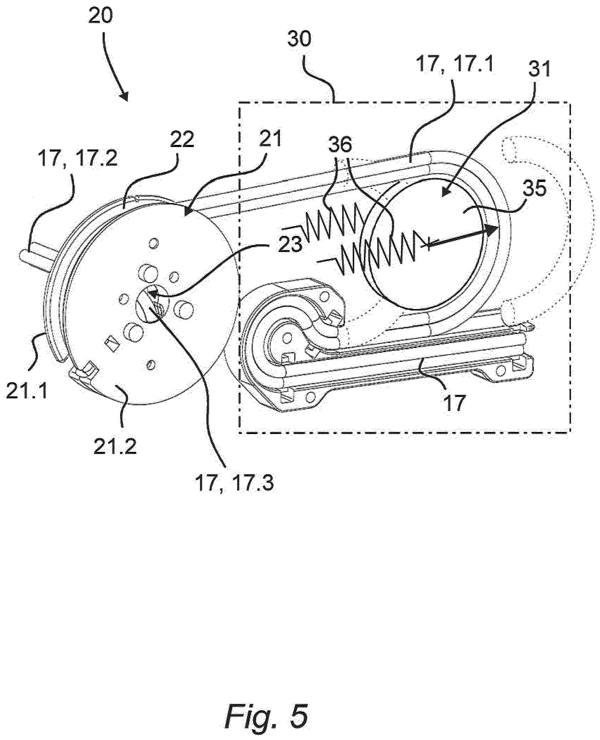

In der dritten Ausführungsform gemäß Fig. 5 weist die Leitungsführungsvorrichtung 20 eine Spannvorrichtung 31 auf, die ausgebildet ist, auf den ersten Strangabschnitt 17.1 eine Zugkraft aufzubringen, welche den von der Kabeltrommel 21 ablaufenden ersten Strangabschnitt 17.1 trotz einer Drehung der Kabeltrommel 21 unter einer Zugspannung in dem Leitungsspeicher 30 hält, wobei die Spannvorrichtung 31 eine Rolle 35 aufweist, welche in dem Leitungsspeicher 30 mittels wenigstens einer Spannfeder 36 gegen einen Schlaufenabschnitt des ersten Strangabschnitts 17.1 gedrückt ist, um dem ersten Strangabschnitt 17.1 eine Zugspannung aufzuprägen.

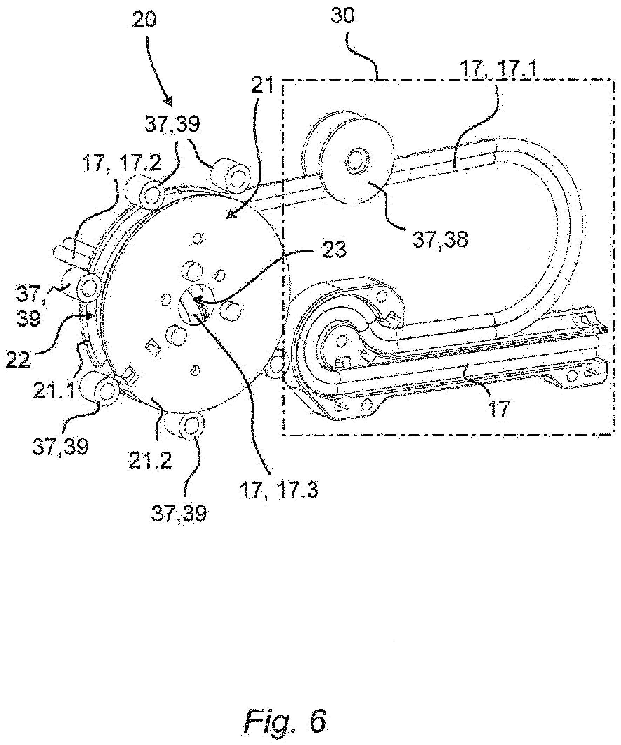

In der vierten Ausführungsform gemäß Fig. 6 weist die Leitungsführungsvorrichtung 20 eine Stützvorrichtung 37 auf, die ausgebildet ist, ein seitliches Ausweichen des ersten Strangabschnitts 17.1 quer zu seiner Längserstreckung zu verhindern, wenn aufgrund einer Drehung der Kabeltrommel 21 der von der Kabeltrommel 21 ablaufende erste Strangabschnitt 17.1 unter Druckkraftwirkung von der Kabeltrommel 21 ausgehend in den Leitungsspeicher 30 geschoben wird, wobei die Stützvorrichtung 37 eine drehbar an der Leitungsführungsvorrichtung 20 gelagerte Stützrolle 38 aufweist, die einen tangential von der Kabeltrommel 21 ablaufenden Abschnitt des ersten Strangabschnitts 17.1 außenseitig dieses Abschnitts anliegend mit ihrer Umfangsfläche abstützt.

In der vierten Ausführungsform gemäß Fig. 6 weist die Leitungsführungsvorrichtung 20 außerdem eine Stützvorrichtung 37 auf, die ausgebildet ist, ein seitliches Ausweichen des ersten Strangabschnitts 17.1 quer zu seiner Längserstreckung zu verhindern, wenn aufgrund einer Drehung der Kabeltrommel 21 der von der Kabeltrommel 21 ablaufende erste Strangabschnitt 17.1 unter Druckkraftwirkung von der Kabeltrommel 21 ausgehend in den Leitungsspeicher 30 geschoben wird, wobei die Stützvorrichtung 37 mehrere entlang des Umfangs der Kabeltrommel 21 verteilt angeordnete stationäre Umfangsrollen 39 aufweist, die an der Leitungsführungsvorrichtung 20 drehbar gelagert sind und die den auf der Kabeltrommel 21 aufgewickelten Abschnitt des ersten Strangabschnitts 17.1 gegen radiales Ausweichen von der Kabeltrommel 21 sichern, indem sie stellenweise den aufgewickelten Abschnitt des ersten Strangabschnitts 17.1 radial von außen abstützen.

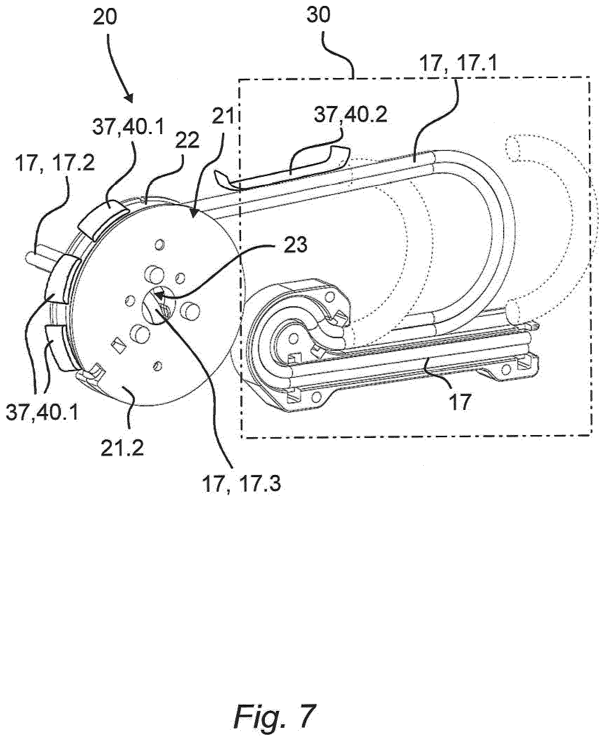

In der fünften Ausführungsform gemäß Fig. 7 weist die Leitungsführungsvorrichtung 20 eine Stützvorrichtung 37 auf, die ausgebildet ist, ein seitliches Ausweichen des ersten Strangabschnitts 17.1 quer zu seiner Längserstreckung zu verhindern, wenn aufgrund einer Drehung der Kabeltrommel 21 der von der Kabeltrommel 21 ablaufende erste Strangabschnitt 17.1 unter Druckkraftwirkung von der Kabeltrommel 21 ausgehend in den Leitungsspeicher 30 geschoben wird, wobei die Stützvorrichtung 37 ein oder mehrere entlang des Umfangs der Kabeltrommel 21 sich erstreckende stationäre Umfangs-Führungsgleitbahnen 40.1 aufweist, die an der Leitungsführungsvorrichtung 20 befestigt sind und die den auf der Kabeltrommel 21 aufgewickelten Abschnitt des ersten Strangabschnitts 17.1 gegen radiales Ausweichen von der Kabeltrommel 21 sichern, indem sie stellenweise oder streckenweise den aufgewickelten Abschnitt des ersten Strangabschnitts 17.1 radial von außen abstützen. Die Stützvorrichtung 37 kann ergänzend eine Führungsgleitschiene 40.2 aufweisen, die einen tangential von der Kabeltrommel 21 ablaufenden Abschnitt des ersten Strangabschnitts 17.1 außenseitig dieses Abschnitts anliegend abstützt.

## Patentansprüche

1. Roboterarm, aufweisend mehrere durch Glieder (G1-G7) verbundene Gelenke (L1-L6), die von Antriebsmotoren (M1-M6) des Roboterarms (3), welche an die Gelenke (L1-L6) angekoppelt sind, antriebsgesteuert verstellbar sind, um die Armstellung zu verändern, wobei ein erstes Glied (G1-G7) mit einem zweiten Glied (G1-G7) durch eines der Gelenke (L1-L6) verbunden ist, über das ein Energieleitungsstrang (17) des Roboterarms (3) hinweggeführt ist, wobei das erste Glied (G1-G7) ein erstes Strukturteil aufweist, an dem ein erster Strangabschnitt (17.1) des Energieleitungsstrangs (17) geführt ist, das zweite Glied (G1-G7) ein zweites Strukturteil aufweist, an dem ein zweiter Strangabschnitt (17.2) des Energieleitungsstrangs (17) geführt ist, und der Energieleitungsstrang (17) einen zwischen dem ersten Strangabschnitt (17.1) und dem zweiten Strangabschnitt (17.2) verlaufenden Zwischenstrangabschnitt (17.3) aufweist, wobei der Zwischenstrangabschnitt (17.3) in einer Leitungsführungsvorrichtung (20) geführt ist, die eine Kabeltrommel (21) umfasst, wobei die Kabeltrommel (21) eine sich zumindest über ihren Teilumfang erstreckende Führungsnut (22) aufweist, in welcher der erste Strangabschnitt (17.1) zum zumindest teilweisen Aufwickeln und Abwickeln bei einer Drehung der Kabeltrommel (21) geführt ist und die Kabeltrommel (21) eine zentrale Austrittsöffnung (23) aufweist, aus welcher der zweiten Strangabschnitt (17.2) axial herausgeführt ist, wobei die Kabeltrommel (21) an dem zweiten Strukturteil befestigt ist und der Zwischenstrangabschnitt (17.3) in wenigstens einem die Führungsnut (22) mit der Austrittsöffnung (23) verbindenden Verbindungskanal (24) der Kabeltrommel geführt ist, **dadurch gekennzeichnet, dass** die Kabeltrommel (21) eine erste Kabeltrommelhälfte (21.1) und eine mit der ersten Kabeltrommelhälfte (21.1) verbundene zweite Kabeltrommelhälfte (21.2) aufweist, wobei die erste Kabeltrommelhälfte (21.1) eine der zweiten Kabeltrommelhälfte (21.2) zugewandte erste Trennfläche (27.1) aufweist, in der eine erste Kanalhälfte (24.1) des Verbindungskanals (24) eingeformt ist und die zweite Kabeltrommelhälfte (21.2) eine der ersten Kabeltrommelhälfte (21.1) zugewandte zweite Trennfläche (27.2) aufweist, in der eine die erste Kanalhälfte (24.1) ergänzende zweite Kanalhälfte (24.2) des Verbindungskanals (24) eingeformt ist.

2. Roboterarm nach Anspruch 1, **dadurch gekennzeichnet, dass** die Kabeltrommel (21) eine erste Kabeltrommelhälfte (21.1) und eine mit der ersten Kabeltrommelhälfte (21.1) verbundene zweite Kabeltrommelhälfte (21.2) aufweist, wobei die erste Kabeltrommelhälfte (21.1) eine über ihren Umfang umlaufende erste Seitenwange (25.1) aufweist, die eine erste Seitenwand der Führungsnut (22) bildet und die zweite Kabeltrommelhälfte (21.2) eine über ihren Umfang umlaufende zweite Seitenwange (25.2) aufweist, die eine zweite Seitenwand der Führungsnut (22) bildet, und wobei ein umlaufender Absatz (26) an der ersten Kabeltrommelhälfte (21.1) und/oder an der zweiten Kabeltrommelhälfte (21.2) einen Nutgrund der Führungsnut (22) bildet.

3. Roboterarm nach Anspruch 1 oder 2, **dadurch gekennzeichnet, dass** die Kabeltrommel (21) zwei oder mehr Verbindungskanäle (24) für mehrere Einzelleitungen des Energieleitungsstrangs (17) aufweist, wobei wenigstens eine erste Einzelleitung in einem ersten Verbindungskanal (24) eingelegt ist und wenigstens eine zweite Einzelleitung in wenigstens einem zweiten Verbindungskanal (24) eingelegt ist.

4. Roboterarm nach einem der Ansprüche 1 bis 3, **dadurch gekennzeichnet, dass** die Leitungsführungsvorrichtung (20) einen der Kabeltrommel (21) zugeordneten Leitungsspeicher (30) umfasst, in dem der erste Strangabschnitt (17.1) zumindest abschnittsweise geführt ist, wobei der Leitungsspeicher (30) ausgebildet ist, einen von der Führungsnut (22) der Kabeltrommel (21) bei ihrer Drehung ablaufende Länge des ersten Strangabschnitts (17.1) in den Leitungsspeicher (30) aufzunehmen und einen in die Führungsnut (22) der Kabeltrommel (21) bei ihrer entgegengesetzten Drehung auflaufende Länge des ersten Strangabschnitts (17.1) aus dem Leitungsspeicher (30) abzugeben.

5. Roboterarm nach Anspruch 4, **dadurch gekennzeichnet, dass** die Leitungsführungsvorrichtung (20) eine Spannvorrichtung (31) aufweist, die ausgebildet ist, auf den ersten Strangabschnitt (17.1) eine Zugkraft aufzubringen, welche den von der Kabeltrommel (21) ablaufenden ersten Strangabschnitt (17.1) trotz einer Drehung der Kabeltrommel (21) unter einer Zugspannung in dem Leitungsspeicher (30) hält, wobei die Spannvorrichtung (31) eine den ersten Strangabschnitt (17.1) im Leitungsspeicher (30) umgreifende Energieführungskette (32) mit mehreren Kettengliedern (33) ist, von denen jeweils zwei benachbarte Kettenglieder (33) über jeweils ein Federscharnier (34) verbunden sind.

6. Roboterarm nach Anspruch 4, **dadurch gekennzeichnet, dass** die Leitungsführungsvorrichtung (20) eine Spannvorrichtung (31) aufweist, die ausgebildet ist, auf den ersten Strangabschnitt (17.1) eine Zugkraft aufzubringen, welche den von der Kabeltrommel (21) ablaufenden ersten Strangabschnitt (17.1) trotz einer Drehung der Kabeltrommel (21) unter einer Zugspannung in dem Leitungsspeicher (30) hält, wobei die Spannvorrichtung (31) eine Rolle (35) aufweist, welche in dem Leitungsspeicher (30) mittels einer Spannfeder (36) gegen einen Schlaufenabschnitt des ersten Strangabschnitts (17.1) gedrückt ist, um dem ersten Strangabschnitt (17.1) eine Zugspannung aufzuprägen.

7. Roboterarm nach Anspruch 4, **dadurch gekennzeichnet, dass** die Leitungsführungsvorrichtung (20) eine Stützvorrichtung (37) aufweist, die ausgebildet ist, ein seitliches Ausweichen des ersten Strangabschnitts (17.1) quer zu seiner Längserstreckung zu verhindern, wenn aufgrund einer Drehung der Kabeltrommel (21) der von der Kabeltrommel (21) ablaufende erste Strangabschnitt (17.1) unter Druckkraftwirkung von der Kabeltrommel (21) ausgehend in den Leitungsspeicher (30) geschoben wird, wobei die Stützvorrichtung (37) eine drehbar an der Leitungsführungsvorrichtung (20) gelagerte Stützrolle (38) aufweist, die einen tangential von der Kabeltrommel (21) ablaufenden Abschnitt des ersten Strangabschnitts (17.1) außenseitig dieses Abschnitts anliegend mit ihrer Umfangsfläche abstützt.

8. Roboterarm nach Anspruch 4, **dadurch gekennzeichnet, dass** die Leitungsführungsvorrichtung (20) eine Stützvorrichtung (37) aufweist, die ausgebildet ist, ein seitliches Ausweichen des ersten Strangabschnitts (17.1) quer zu seiner Längserstreckung zu verhindern, wenn aufgrund einer Drehung der Kabeltrommel (21) der von der Kabeltrommel (21) ablaufende erste Strangabschnitt (17.1) unter Druckkraftwirkung von der Kabeltrommel (21) ausgehend in den Leitungsspeicher (30) geschoben wird, wobei die Stützvorrichtung (37) mehrere entlang des Umfangs der Kabeltrommel (21) verteilt angeordnete stationäre Umfangsrollen (39) aufweist, die an der Leitungsführungsvorrichtung (20) drehbar gelagert sind und die den auf der Kabeltrommel (21) aufgewickelten Abschnitt des ersten Strangabschnitts (17.1) gegen radiales Ausweichen von der Kabeltrommel (21) sichern, indem sie stellenweise den aufgewickelten Abschnitt des ersten Strangabschnitts (17.1) radial von außen abstützen.

9. Roboterarm nach Anspruch 4, **dadurch gekennzeichnet, dass** die Leitungsführungsvorrichtung (20) eine Stützvorrichtung (37) aufweist, die ausgebildet ist, ein seitliches Ausweichen des ersten Strangabschnitts (17.1) quer zu seiner Längserstreckung zu verhindern, wenn aufgrund einer Drehung der Kabeltrommel (21) der von der Kabeltrommel (21) ablaufende erste Strangabschnitt (17.1) unter Druckkraftwirkung von der Kabeltrommel (21) ausgehend in den Leitungsspeicher (30) geschoben wird, wobei die Stützvorrichtung (37) ein oder mehrere entlang des Umfangs der Kabeltrommel (21) sich erstreckende stationäre Umfangs-Führungsgleitbahnen (40) aufweist, die an der Leitungsführungsvorrichtung (20) befestigt sind und die den auf der Kabeltrommel (21) aufgewickelten Abschnitt des ersten Strangabschnitts (17.1) gegen radiales Ausweichen von der Kabeltrommel (21) sichern, indem sie stellenweise oder streckenweise den aufgewickelten Abschnitt des ersten Strangabschnitts (17.1) radial von außen abstützen.

## Claims

1. Robot arm comprising a plurality of joints (L1-L6) connected by links (G1-G7), which are moveable in a drive-controlled manner by drive motors (M1-M6) of the robot arm (3) which are coupled to the joints (L1-L6), in order to change the arm position, wherein a first link (G1-G7) is connected to a second link (G1-G7) by one of the joints (L1-L6) through which an energy supply line (17) of the robot arm (3) is guided, wherein the first link (G1-G7) comprises a first structural part on which a first strand section (17.1) of the energy supply line (17) is guided, the second link (G1-G7) comprises a second structural part on which a second strand section (17.2) of the energy supply line (17) is guided, and the energy supply line (17) comprises an intermediate strand section (17.3) extending between the first strand section (17.1) and the second strand section (17.2), wherein the intermediate strand section (17.3) is guided in a cable guide device (20) which comprises a cable drum (21), wherein the cable drum (21) comprises a guide groove (22) extending at least over part of its circumference, in which the first strand section (17.1) is guided for at least partial winding and unwinding during rotation of the cable drum (21), and the cable drum (21) comprising a central outlet opening (23) from which the second strand section (17.2) is guided axially out of the cable drum (21), wherein the cable drum (21) is fastened to the second structural part and the intermediate strand section (17.3) is guided in at least one connecting channel (24) of the cable drum connecting the guide groove (22) with the outlet opening (23), **characterized in that** the cable drum (21) comprises a first cable drum half (21.1) and a second cable drum half (21.2) connected to the first cable drum half (21.1), wherein the first cable drum half (21.1) has a first separating surface (27.1) facing the second cable drum half (21.2), in which a first channel half (24.1) of the connecting channel (24) is formed, and the second cable drum half (21.2) has a second separating surface (27.2) facing the first cable drum half (21.1), in which a second channel half (24.2) of the connecting channel (24) is formed, which complements the first channel half (24.1).

2. Robot arm according to claim 1, **characterized in that** the cable drum (21) has a first cable drum half (21.1) and a second cable drum half (21.2) connected to the first cable drum half (21.1), wherein the first cable drum half (21.1) has a first side wall (25.1) extending around its circumference, which forms a first side wall of the guide groove (22), and the second cable drum half (21.2) has a second side wall (25.2) extending around its circumference which forms a second side wall of the guide groove (22), and wherein a circumferential shoulder (26) on the first cable drum half (21.1) and/or on the second cable drum half (21.2) forms a groove base of the guide groove (22).

3. Robot arm according to claim 1 or 2, **characterized in that** the cable drum (21) has two or more connecting channels (24) for multiple individual cables of the energy supply line (17), wherein at least one first individual cable is inserted in a first connecting channel (24) and at least one second individual cable is inserted in at least one second connecting channel (24).

4. Robot arm according to any one of claims 1 to 3, **characterized in that** the cable guide device (20) comprises a cable storage device (30) assigned to the cable drum (21), in which the first strand section (17.1) is guided at least in a section, wherein the line storage device (30) is designed to receive a length of the first strand section (71.1) running out of the guide groove (22) of the cable drum (21) during its rotation and running out a length of the first strand section (71.1) out of the storage device (30), which is received in the guide groove (22) of the cable drum (21) during its opposite rotation.

5. Robot arm according to claim 4, **characterized in that** the cable guide device (20) comprises a tensioning device (31) which is designed to apply a tensile force to the first strand section (17.1) which holds the first strand section (17.1) running off the cable drum (21) under tension, despite rotation of the cable drum (21), wherein the tensioning device (31) comprises an energy guide chain (32) with several chain links (33) surrounding the first strand section (17.1) in the cable storage device (30), with two adjacent chain links (33) connected to each other via a spring hinge (34).

6. Robot arm according to claim 4, **characterized in that** the cable guide device (20) comprises a tensioning device (31) which is designed to apply a tensile force to the first strand section (17.1) which holds the first strand section (17.1) running off the cable drum (21) running off the cable drum (21) under tension, despite rotation of the cable drum (21), wherein the tensioning device (31) has a roller (35) which is pressed in the cable storage device (30) by means of a tension spring (36) against a loop section of the first strand section (17.1) in order to apply tension to the first strand section (17.1).

7. Robot arm according to claim 4, **characterized in that** the cable guide device (20) comprises a support device (37) which is designed to prevent lateral displacement of the first strand section (17.1) transversely to its longitudinal extension when, due to a rotation of the cable drum (21), the first strand section (17.1) running off the cable drum (21) is pushed into the cable storage device (30) under the effect of pressure force originating from the cable drum (21), wherein the support device (37) has a support roller (38) mounted rotatably on the cable guide device (20), which supports a section of the first strand section (17.1) running tangentially from the cable drum (21) with its peripheral surface abutting the outside of this section.

8. Robot arm according to claim 4, **characterized in that** the cable guide device (20) comprises a support device (37) which is designed to prevent lateral displacement of the first strand section (17.1) transversely to its longitudinal extension when, due to rotation of the cable drum (21), the first strand section (17.1) running off the cable drum (21) is pushed into the cable storage device (30) under the effect of pressure force originating from the cable drum (21), wherein the support device (37) comprises a plurality of stationary circumferential rollers (39) distributed along the circumference of the cable drum (21), which are rotatably mounted on the cable guide device (20) and which secure the section of the first strand section (17.1) being wound on the cable drum (21) against radial displacement from the cable drum (21) by supporting the wound section of the first strand section (17.1) radially from the outside at some places.

9. Robot arm according to claim 4, **characterized in that** the cable guide device (20) comprises a support device (37) which is designed to prevent lateral displacement of the first strand section (17.1) transversely to its longitudinal extension when, due to rotation of the cable drum (21), the first strand section (17.1) running off the cable drum (21) is pushed into the cable storage device (30) under the effect of a pressure force originating from the cable drum (21), wherein the support device (37) comprises one or more stationary circumferential guide slides (40) extending along the circumference of the cable drum (21), which are fixedly connected to the cable guide device (20) and which secure the section of the first strand section (17.1) being wound onto the cable drum (21) against radial displacement from the cable drum (21) by supporting the wound section of the first strand section (17.1) radially from the outside at some places or along sections.

## Revendications

1. Bras de robot comportant une pluralité d'articulations (L1-L6) reliées par des éléments (G1-G7) qui sont réglables par commande motrice par des moteurs d'entraînement (M1-M6) du bras de robot (3) qui sont couplées aux articulations (L1-L6) de manière à modifier la position du bras, un premier élément (G1-G7) étant relié à un deuxième élément (G1-G7) par l'intermédiaire de l'une des articulations (L1-L6) sur laquelle passe un brin de conduits d'énergie (17) du bras de robot (3), le premier élément (G1-G7) comportant une première partie structurelle sur laquelle est guidée une première section de brin (17.1) du brin de conduits d'énergie (17), le deuxième élément (G1-G7) comportant une deuxième partie structurelle sur laquelle est guidée une deuxième section de brin (17.2) du brin de conduits d'énergie (17), et le brin de conduits d'énergie (17) comporte une section de brin intermédiaire (17.3) s'étendant entre la première section de brin (17.1) et la deuxième section de brin (17.2), la section de brin intermédiaire (17.3) étant guidée dans un dispositif de guidage de câble (20) qui comprend un tambour à câble (21), qui comporte une rainure de guidage (22) s'étendant au moins sur une partie de sa circonférence, dans laquelle la première section de brin (17.1) est guidée pour s'enrouler et se dérouler au moins partiellement lors d'une rotation du tambour à câble (21), et le tambour à câble (21) présente une ouverture de sortie centrale (23) à partir de laquelle la deuxième section de brin (17.2) est guidée axialement, le tambour à câble (21) étant fixé à la deuxième partie structurelle et la section de brin intermédiaire (17.3) étant guidé dans au moins un canal de liaison (24) du tambour à câble reliant la rainure de guidage (22) à l'ouverture de sortie (23), **caractérisé en ce que** le tambour à câble (21) comporte une première moitié de tambour à câble (21.1) et une deuxième moitié de tambour à câble (21.2) reliée à la première moitié de tambour à câble (21.1), la première moitié de tambour à câble (21.1) présentant une première surface de séparation (27.1) tournée vers la deuxième moitié de tambour à câble (21.2), dans laquelle une première moitié du canal (24.1) du canal de liaison (24) est formée, et la deuxième moitié de tambour à câble (21.2) présente une deuxième surface de séparation (27.2) tournée vers la première moitié de tambour à câble (21.2) et dans laquelle est formée une deuxième moitié de canal (24.2) du canal de liaison (24) qui complète la première moitié de canal (24.1).

2. Bras de robot selon la revendication 1, **caractérisé en ce que** le tambour à câble (21) comprend une première moitié de tambour à câble (21.1) et une deuxième moitié de tambour à câble (21.2) reliée à la première moitié de tambour à câble (21.1), la première moitié de tambour à câble (21.1) présentant une première joue latérale (25.1) s'étendant sur sa circonférence, qui forme une première paroi latérale de la rainure de guidage (22), et la deuxième moitié de tambour à câble (21.2) présentant une deuxième joue latérale (25.2) s'étendant sur sa circonférence, qui forme une deuxième paroi latérale de la rainure de guidage (22), et dans lequel un épaulement périphérique (26) sur la première moitié de tambour à câble (21.1) et/ou sur la deuxième moitié de tambour à câble (21.2) forme un fond de rainure de la rainure de guidage (22).

3. Bras de robot selon la revendication 1 ou 2, **caractérisé en ce que** le tambour à câble (21) comporte deux ou plus canaux de liaison (24) pour plusieurs câbles individuels du brin de conduits d'énergie (17), au moins un premier câble individuel étant inséré dans un premier canal de liaison (24) et au moins un deuxième câble individuel est inséré dans au moins un deuxième canal de liaison (24).

4. Bras de robot selon l'une des revendications 1 à 3, **caractérisé en ce que** le dispositif de guidage de câble (20) comprend un dispositif de stockage de câbles (30) associé au tambour à câble (21), dans lequel la première section de brin (17.1) est guidée au moins par sections, le dispositif de stockage de câbles (30) étant conçu pour recevoir une longueur du premier section de brin (17.1) dans le stockage de câbles (30) déroulent de la rainure de guidage (22) du tambour à câble (21) lors de sa rotation et pour donner une longueur du premier section de brin (17.1) du stockage de câbles (30) enroulent à la rainure de guidage (22) du tambour à câble (21) lors de sa rotation opposée.

5. Bras de robot selon la revendication 4, **caractérisé en ce que** le dispositif de guidage de câble (20) comprend un dispositif de tension (31) qui est conçu pour exercer une force de traction sur la première section de brin (17.1) qui maintient la première section de brin (17.1) qui se déroule du tambour à câble (21) sous une tension de traction dans le dispositif de stockage de câbles (30) malgré une rotation du tambour à câble (21), le dispositif de tension (31) étant une chaîne de guidage d'énergie (32) qui entoure le premier section de brin (17.1) dans le dispositif de stockage de câbles (30) et qui comportant plusieurs maillons de chaîne (33) dont deux maillons de chaîne adjacents (33) sont reliés par une charnière à ressort (34).

6. Bras de robot selon la revendication 4, **caractérisé en ce que** le dispositif de guidage de câbles (20) comporte un dispositif de tension (31) qui est conçu pour exercer une force de traction sur le premier section de brin (17.1) qui maintient le premier section de brin (17.1) qui se déroule du tambour à câble (21) sous une tension de traction dans le dispositif de stockage de câbles (30) malgré une rotation du tambour à câble (21), le dispositif de tension (31) comportant un rouleau (35) qui est pressé dans le dispositif de stockage de câbles (30) au moyen d'un ressort de tension (36) contre une partie formant boucle de la première section de brin (17.1) afin d'imprimer une tension de traction au premier section de brin (17.1).

7. Bras de robot selon la revendication 4, **caractérisé en ce que** le dispositif de guidage de câbles (20) comporte un dispositif de support (37) qui est conçu pour empêcher un déplacement latéral de la première section de brin (17.1) transversalement à son extension longitudinale lorsque, en raison d'une rotation du tambour à câble (21), le premier section de brin (17.1) déroulant du tambour à câble (21) est poussé sous l'effet d'une force de pression provenant du tambour à câble (21) dans le dispositif de stockage de câbles (30), le dispositif de support (37) comportant un galet d'appui (38) monté de manière rotative sur le dispositif de guidage de câbles (20), qui soutient par sa surface périphérique une partie de la première section de brin (17.1) déroulent tangentiellement par rapport au tambour à câble (21), en s'appuyant contre la face extérieure de cette partie.

8. Bras de robot selon la revendication 4, **caractérisé en ce que** le dispositif de guidage de câble (20) comporte un dispositif de support (37) qui est conçu pour empêcher un déplacement latéral de la première section de brin (17.1) transversalement à son extension longitudinale lorsque, en raison d'une rotation du tambour à câble (21), le premier section de brin (17.1) déroulant du tambour à câble (21) est poussé sous l'effet d'une force de pression provenant du tambour à câble (21) dans le dispositif de stockage de câbles (30), le dispositif de support (37) comportant plusieurs rouleaux périphériques (39) stationnaires distribué de manière répartie le long de la périphérie du tambour à câble (21), qui sont montés de manière rotative sur le dispositif de guidage de câble (20) et qui sécurisé la partie de la première section de brin (17.1) enroulée sur le tambour à câble (21) contre un déplacement radial par rapport au du tambour à câble (21) en soutenant localement la partie enroulée de la première section de brin (17.1) radialement depuis l'extérieur.

9. Bras de robot selon la revendication 4, **caractérisé en ce que** le dispositif de guidage de câbles (20) comporte un dispositif de support (37) qui est conçu pour empêcher un déplacement latéral de la première section de brin (17.1) transversalement à son extension longitudinale lorsque, en raison d'une rotation du tambour à câble (21), la première section de brin (17.1) déroulant du tambour à câble (21) est poussée sous l'effet d'une force de pression provenant du tambour à câble (21) dans le dispositif de stockage de câbles (30), le dispositif de support (37) comportant une ou plusieurs glissières de guidage périphériques (40) stationnaires s'étendant le long de la périphérie du tambour à câble (21), qui sont fixées au dispositif de guidage de câbles (20) et qui sécurisé la partie de la première section de brin (17.1) enroulée sur le tambour à câble (21) contre un déplacement radial par rapport au tambour à câble (21) en soutenant localement ou par endroits la partie enroulée du premier section de premier section de brin (17.1) radialement depuis l'extérieur.
